# EUROPEAN PATENT APPLICATION

(11) **EP 4 546 269 A1**
(43) Date of publication of application: **30.04.2025**
(21) Application number: 23306852.7
(22) Date of filing: 23.10.2023
(51) Int. Cl.: G06T 15/04

(54) **METHOD AND APPARATUS FOR GENERATING A TEXTURE FOR A 3D MODEL**

(71) Applicant: 7 Sensing Software, 75012 Paris (FR)
(72) Inventor: AI, Di, 94000 Créteil (FR); MANCEAU, Josselin, 92220 Bagneux (FR); MARTI, Clément, 92240 Malakoff (FR)
(74) Representative: Novagraaf Technologies

(57) **Abstract**

A texture is generated for a 3D model of a user by reprojecting one or more images of the user onto the 3D model. When two or more images are reprojected, a map of merging weights is defined for each of the at least two reprojected images, and the at least two reprojected images are merged by applying the map of merging weights defined for each of the at least two reprojected images. In a first embodiment, the merging weight assigned for a given reprojected image is predefined depending on the position of the point on the 3D model. In a second embodiment, a given reprojected image corresponds to a given view of the user from a given angle of view, and, for a point of the 3D model, the merging weight assigned for the given reprojected image is obtained as an increasing function of the alignment between a perpendicular to the 3D model at said point and the given angle of view.

## Description

### TECHNICAL FIELD

Various example embodiments relate generally to apparatus and methods for generating a texture relating a 3D model of a user.

A 3D model of a user, commonly referred to as an avatar, can be used in many applications such as video conference, especially in virtual reality where the face of the users is obscured by the headset, gaming where the players can play with their face on the characters of the game, shopping (especially online) where customers can try new haircuts, glasses, makeups, etc. on their reconstructed 3D avatar.

A texture generation method for a 3D model of a user can be used in many applications for example for reconstructing, editing, animating the 3D model model.

### BACKGROUND

A 3D model of a user can be defined as a shape and a texture. The shape describes the geometry of the user e.g. the face of the user such as the position, the size and the contour of the facial features. The texture describes the appearance of the user such as the skin color, the skin texture and the lighting. The shape is typically defined as a mesh comprising vertices and edges which define small surfaces, for example triangles. Generating a texture for the 3D model consists in filling in each surface of the mesh with appropriate color values. The texture consists in an image file, the pixels of which are used to fill color values inside the triangles of the mesh. The correspondence between the image and mesh is done through an UV map.

A known solution for generating a texture for a 3D model is to run a neural network to predict texture weights from one or more input images, the predicted texture weights being used to recombine a set of existing textures. For example, the neural network can jointly predict the shape of the 3D model (e.g. in the form of 3D morphable model parameters) and the texture weights. However, such solutions can only produce a smooth texture which does not capture fine details specific to the user such as wrinkles, beauty spots, or even precise makeup. Consequently, the overall rendering is not as realistic as would be expected in many applications.

An example of such an approach can be found in the article dated 24 April 2020 "Deep 3D Portrait from a Single Image" by Sicheng Xu, Jiaolong Yang, Dong Chen, Fang Wen, Yu Deng, Yunde Jia, and Xin Tong.

The present disclosure relates to a solution for generating a texture for a 3D model of a user which enables capturing fine details of the user like wrinkles, beauty spot, makeup etc...

### SUMMARY

According to some aspects, there is provided the subject matter of the independent claims. Some further aspects are defined in the dependent claims.

According to a first aspect, a method for generating a texture for a 3D model of a user is diclosed, which comprises reprojecting one or more images of the user onto the 3D model.

In a second aspect, an apparatus is disclosed comprising means for generating a texture for a 3D model of a user, said means being configured to reproject one or more images of the user onto the 3D model.

In a first embodiment, the method comprises reprojecting at least two images to obtain at least two reprojected images, defining a map of merging weights for each of the at least two reprojected images, merging the at least two reprojected images by applying the map of merging weights defined for each of the at least two reprojected images. And the apparatus is configured to reproject at least two images to obtain at least two reprojected images, define a map of merging weights for each of the at least two reprojected images, merge the at least two reprojected images by applying the map of merging weights defined for each of the at least two reprojected images.

In a first exemplary implementation of the disclosed method and apparatus, for a point of the 3D model, the merging weight assigned for a given reprojected image is predefined depending on the position of the point on the 3D model.

In a second exemplary implementation of the disclosed method and apparatus, a given reprojected image corresponds to a given view of the user from a given angle of view, and, for a point of the 3D model, the merging weight assigned for the given reprojected image is obtained as an increasing function of the alignment between a perpendicular to the 3D model at said point and the given angle of view.

For example, merging is performed via a Laplacian pyramid merging.

In a second embodiment, the disclosed method further comprises registering at least one image prior to its reprojection, the image corresponding to a given view of the user from a given angle of view. And said means of the disclosed apparatus are further configured to register at least one image prior to its reprojection, the image corresponding to a given view of the user from a given angle of view. Registering an image comprises: obtaining the position of one or more points of interest in a virtual image of the 3D model, said virtual image being viewed from said given angle of view, detecting, in the at least one image, one or more landmarks corresponding to the one or more points of interest, and registering the at least one image on the virtual image based on said landmarks, to obtain at least one registered image.

In a third embodiment, the disclosed method comprises removing unwanted shadows and/or highlights from one or more area of the texture. And said means of the disclosed apparatus are further configured to remove unwanted shadows and/or highlights from one or more area of the texture.

In a third aspect, a computer program product is disclosed comprising program instructions which when executed by an apparatus cause the apparatus to execute a method of generating a texture for a 3D model of a user as disclosed herein.

In another aspect, a computer readable medium is disclosed, comprising program instructions which when executed by an apparatus cause the apparatus to execute a method of generating a texture for a 3D model of a user as disclosed herein.

In another aspect, a non-transitory computer readable medium is disclosed, comprising program instructions which when executed by an apparatus cause the apparatus to execute a method of generating a texture for a 3D model of a user as disclosed herein.

In another aspect, an apparatus is disclosed which comprises means for implementing a reconstruction method or a training method as disclosed herein.

In another aspect, an apparatus is disclosed comprising at least one processor and at least one memory storing program instructions that, when executed by the at least one processor, cause the apparatus at least to implement a method of generating a texture for a 3D model of a user as disclosed herein.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1 is flow chart of an example of a method for generating a texture for the mesh.
FIG.2 is a schematic representation of the registration and the projection steps of the method of generating a texture as disclosed with reference to FIG.1.
FIG.3 is a schematic representation of the computation of weights to be applied when merging images to generate the texture for the mesh.
FIG.4 is a block diagram of an example of apparatus for implementing a method of generating a texture for a 3D model of a user as disclosed herein.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

The face or the head of a user is the most critical and the most challenging part when dealing with of a 3D model of a user. For simplicity, the exemplary embodiments will be described below by focusing on the face or the head of the user. This is however not limitative and the methods described herein may apply or extend to any part of a body of a user.

The texture generation method which is disclosed herein is generated from one or more images of the user. For example, these images can be still pictures taken from a handheld DSLR (Digital Single-Lens Reflex) camera, or can be extracted from a video shot by the user with a user device like a smartphone or from a video taken from a webcam connected to a computer. They can also be obtained from other sources. The one or more images of the user which are used for generating the texture, are referred to as real images in the following of the description by opposition to virtual images. They are denoted Iᵢ (i = 1, ....m), where m is an integer and can be different from n). Generating the texture from one or more real images of the user allows to capture fine details of the user (like wrinkles, beauty spots, or even precise makeup).

A given image of the user correspond to a given view of that user from a given angle of view. Several images may correspond to different angles of view.

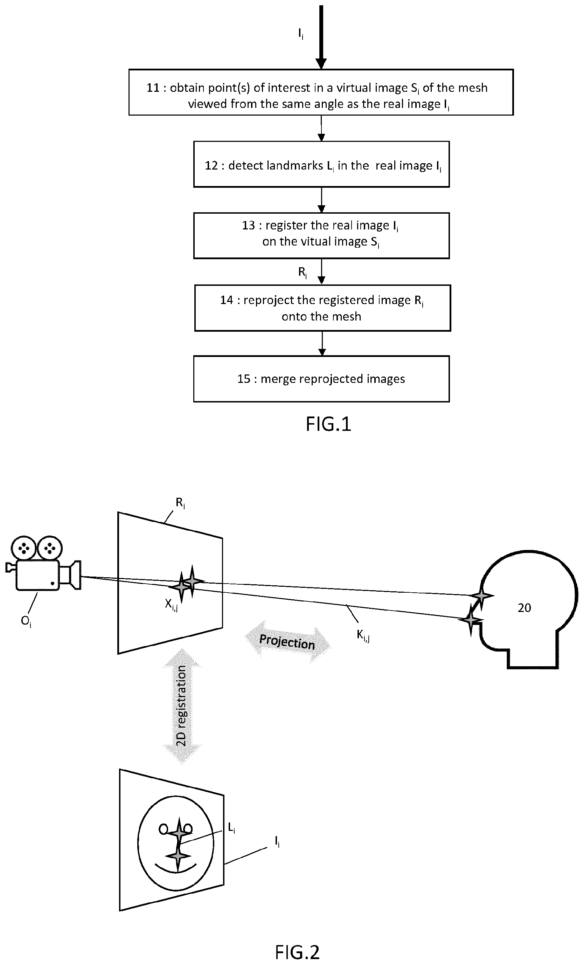

As depicted in FIG.1, the method comprises for each real image Iᵢ a step 11 of obtaining the position of one or more points of interest in a virtual image Sᵢ of the mesh viewed from the same angle of view as the real image Iᵢ. For example, the one or more points of interest correspond to the nose and/or the eyes. The method further includes a step 12 of detecting landmarks Lᵢ in the real image Iᵢ, corresponding to the points of interest, and a step 13 of registering the real image Iᵢ on the virtual image Sᵢ based on the detected landmarks Lᵢ. At step 14, a texture is applied to a mesh representing the shape of the user by reprojecting each of the m registered images Rᵢ, i=1, ..., m onto the mesh.

The step 14 of reprojecting the registered images Rᵢ onto the mesh is illustrated in FIG.2. As described above, the real image Iᵢ is first registered on the virtual image Sᵢ based on the landmarks Lᵢ. The registered image Rᵢ corresponds to a given position Oᵢ of a virtual camera relative to the user. The texture is applied to the mesh 20 by drawing a line K_{i,j} between the camera position Oᵢ and a point X_{i,j} in the registered image Rᵢ, and by applying the color value at point X_{i,j} in the registered image Rᵢ to the point of intersection of the line K_{i,j} and the mesh 20.

The registration step provides improved results as it corrects for inaccuracy in shape or head pose estimation. However, it will be understood that registering the real images onto the virtual images to obtain the texture is not required. It is possible to generate the texture directly from one or more real images. It is also possible to register only part of the real images contributing to the texture, for example a real image corresponding to a frontal view of the user.

At step 15, when m >1, the reprojected images are merged. Merging allows to blend the reprojected images smoothly and avoid artifacts at the seams (if several projected images have pixel values for same part of the face, without blending the pixel values will be added which will create edge effects in the 3D model). For example, merging can be done by applying Laplacian pyramid merging.

In Laplacian pyramid merging, a weighting is applied to each reprojected image. This can be done by defining a map of merging weights for each of the reprojected images and by applying said maps of merging weights when merging. For example, the map of merging weights can be made of handcrafted fixed preset merging weights. This is advantageous when reconstructing the texture for meshes with known geometry, such as 3D morphable face models, for which the correspondence between the mesh and the facial features is known beforehand and fixed. Alternatively, the merging weights are computed so that a point of an image is given more or less importance when generating the texture, depending on the alignment between the angle of view of that image and the normal to the surface of the mesh at that point.

For example, for a point of the 3D model, the merging weight assigned for a reprojected image is an increasing function of the alignment between a perpendicular to the 3D model at said point and the angle of view corresponding to the reprojected image.

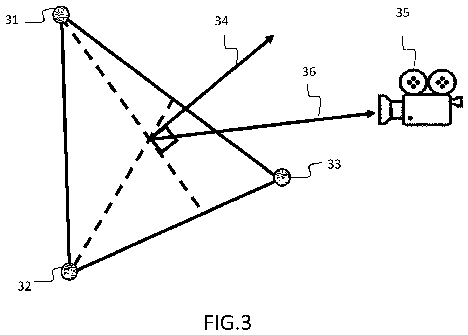

An example of computation of merging weights will now be described with reference to FIG.3.

As depicted in FIG.3, the surface of the mesh corresponding to each texture pixel is determined. This surface is delimited by three vertices 31,32, 33 and edges between the three vertices. The normal vector 34 perpendicular to this surface and facing outwards is computed. For a given reprojected image, i.e. for a given position of the virtual camera 35, a unit vector 36 going from the center of the surface towards the position of the camera is also computed. The merging weight assigned to that image for that texture pixel is obtained from the dot product of these two vectors. It will be understood that any other formula can be used which assigns a high value to the merging weight when the two vectors are aligned, and a value close to zero when they are perpendicular. Advantageously, surfaces facing away from the camera, and those occluded by other surfaces, are not filled in with texture.

In an embodiment, the reconstruction method further comprises additional processing steps, for example to correct the ambient lighting and create an albedo texture as if it was taken with uniform lighting. To do so the hardest shadows are removed (especially the strong linear shadows that disappear with changes of expression like eyelid shadow and the shadow between the lips). Since all the textures correspond to the same geometry, the positions of the eyelids and lips in the texture are known. Masks can be created around those positions to perform a shadow-removing operation affecting only these masks, such as blurring with a gaussian filter, or inpainting these areas. In addition, or alternatively, highlights can be removed. Highlights correspond to specular reflections. They can be detected by identifying saturated pixels in the image. Saturated pixels can be replaced with color of pixels located around the satured pixel.

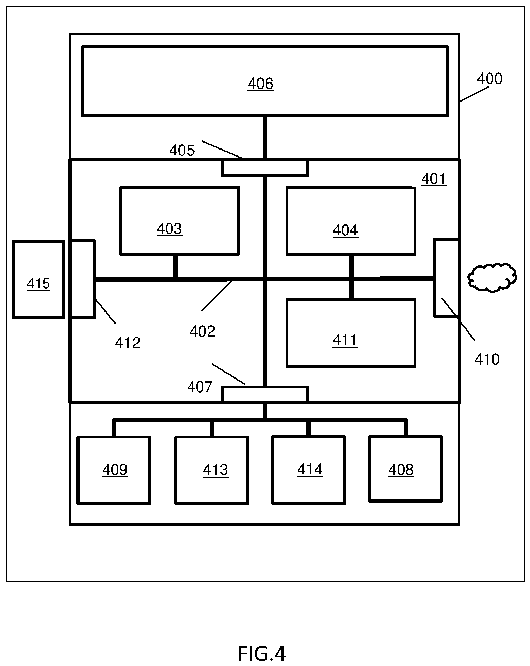

FIG.4 depicts a high-level block diagram of an apparatus 400 suitable for implementing various aspects of the disclosure. Although illustrated in a single block, in other embodiments the apparatus 400 may also be implemented using parallel and distributed architectures. Thus, for example, various steps such as those illustrated in the methods described above by reference to FIG.1 to 3 may be executed using apparatus 400 sequentially, in parallel, or in a different order based on particular implementations.

According to an exemplary embodiment, depicted in FIG.4, apparatus 400 comprises a printed circuit board 401 on which a communication bus 402 connects a processor 403 (e.g., a central processing unit "CPU"), a random access memory 404, a storage medium 411, possibly an interface 405 for connecting a display 406, a series of connectors 407 for connecting user interface devices or modules such as a mouse or trackpad 408 and a keyboard 409, a wireless network interface 410, a wired network interface 412, a camera 413, an inertial measurement unit 414. Depending on the functionality required, the apparatus may implement only part of the above. For example, an apparatus which executes the texture generation method as disclosed herein may not require a camera 413 nor an inertial measurement unit 414. When the method is executed by a mobile device, it will not require a mouse 408, a keyboard 409, a wired network interface 412. Certain modules of FIG.4 may be internal or connected externally, in which case they do not necessarily form integral part of the apparatus itself. E.g. display 106 may be a display that is connected to the apparatus only under specific circumstances, or the apparatus may be controlled through another device with a display, i.e. no specific display 406 and interface 405 are required for such an apparatus. Memory 411 contains software code which, when executed by processor 403, causes the apparatus to perform the methods described herein. Memory 411 can also store the angle-specialized neural network used in the execution of the reconstruction method. In an exemplary embodiment, a detachable storage medium 415 such as a USB stick may also be connected. For example, the detachable storage medium 415 can hold the software code to be uploaded to memory 411.

The processor 403 may be any type of processor such as a general-purpose central processing unit ("CPU") or a dedicated microprocessor such as an embedded microcontroller or a digital signal processor ("DSP").

In addition, apparatus 400 may also include other components typically found in computing systems, such as an operating system, queue managers, device drivers, or one or more network protocols that are stored in memory 411 and executed by the processor 403.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A method for generating a texture for a 3D model of a user, comprising:
- reprojecting at least two images of the user onto the 3D model to obtain at least two reprojected images,
- defining a map of merging weights for each of the at least two reprojected images,
- merging the at least two reprojected images by applying the map of merging weights defined for each of the at least two reprojected images.

2. A method as claimed in claim 1, wherein for a point of the 3D model, the merging weight assigned for a given reprojected image is predefined depending on the position of the point on the 3D model.

3. A method as claimed in claim 1, wherein a given reprojected image corresponds to a given view of the user from a given angle of view, and, for a point of the 3D model, the merging weight assigned for the given reprojected image is obtained as an increasing function of the alignment between a perpendicular to the 3D model at said point and the given angle of view.

4. A method as claimed in any of claims 1 to 3, wherein merging is performed via a Laplacian pyramid merging.

5. A method as claimed in any of claims 1 to 4, further comprising registering at least one image prior to its reprojection, the image corresponding to a given view of the user from a given angle of view, wherein registering an image comprises:
- obtaining the position of one or more points of interest in a virtual image of the 3D model, said virtual image being viewed from said given angle of view,
- detecting, in the at least one image, one or more landmarks corresponding to the one or more points of interest, and registering the at least one image on the virtual image based on said landmarks, to obtain at least one registered image.

6. A method as claimed in any of claims 1 to 5, further comprising removing unwanted shadows and/or highlights from one or more area of the texture.

7. A computer program product comprising program instructions which when executed by an apparatus cause the apparatus to execute a method as claimed in any of claims 1 to 6.

8. An apparatus comprising means for generating a texture for a 3D model of a user, said means being configured to:
- reproject at least two images to obtain at least two reprojected images,
- define a map of merging weights for each of the at least two reprojected images,
- merge the at least two reprojected images by applying the map of merging weights defined for each of the at least two reprojected images.

9. An apparatus as claimed in claim 8, wherein for a point of the 3D model, the merging weight assigned for a given reprojected image is predefined depending on the position of the point on the 3D model.

10. An apparatus as claimed in claim 8, wherein a given reprojected image corresponds to a given view of the user from a given angle of view, and, for a point of the 3D model, the merging weight assigned for the given reprojected image is obtained as an increasing function of the alignment between a perpendicular to the 3D model at said point and the given angle of view.

11. An apparatus as claimed in any of claims 8 to 10, wherein merging is performed via a Laplacian pyramid merging.

12. An apparatus as claimed in any of claims 8 to 11, wherein said means are further configured to register at least one image prior to its reprojection, the image corresponding to a given view of the user from a given angle of view, wherein registering an image comprises:
- obtaining the position of one or more points of interest in a virtual image of the 3D model, said virtual image being viewed from said given angle of view,
- detecting, in the at least one image, one or more landmarks corresponding to the one or more points of interest, and registering the at least one image on the virtual image based on said landmarks, to obtain at least one registered image.

13. An apparatus as claimed in any of claims 8 to 12, wherein said means are further configured to remove unwanted shadows and/or highlights from one or more area of the texture.
